(19) Europäisches Patentamt European Patent Office Office européen des brevets

(11) **EP 4 163 997 A1**

(12) **EUROPEAN PATENT APPLICATION**
published in accordance with Art. 153(4) EPC

(43) Date of publication:
**12.04.2023 Bulletin 2023/15**

(21) Application number: **21822346.9**

(22) Date of filing: **09.06.2021**

(51) International Patent Classification (IPC):
*H01M 4/36* (2006.01)   *H01M 4/505* (2010.01)
*H01M 4/525* (2010.01)   *H01M 10/0562* (2010.01)

(52) Cooperative Patent Classification (CPC):
**H01M 4/36; H01M 4/505; H01M 4/525;**
**H01M 10/0562;** Y02E 60/10

(86) International application number:
**PCT/JP2021/021860**

(87) International publication number:
**WO 2021/251416 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2020   JP 2020100294**

(71) Applicant: **SUMITOMO METAL MINING CO., LTD.**
**Tokyo**
**105-8716 (JP)**

(72) Inventor: **FUJIMOTO, Saihei**
**Niihama-shi, Ehime 792-0002 (JP)**

(74) Representative: **Müller-Boré & Partner**
**Patentanwälte PartG mbB**
**Friedenheimer Brücke 21**
**80639 München (DE)**

(54) **POSITIVE ELECTRODE ACTIVE MATERIAL FOR LITHIUM ION SECONDARY BATTERIES, METHOD FOR PRODUCING SAID POSITIVE ELECTRODE ACTIVE MATERIAL, AND LITHIUM ION SECONDARY BATTERY**

(57)   The purpose of the present invention is to provide a positive electrode active material having a charge and discharge capacity equal to a charge and discharge capacity of a lithium ion secondary battery using an electrolyte solution, even when it is used in an all-solid-state battery. A positive electrode active material for a lithium ion secondary battery comprising a coating layer, wherein, a substance quantity ratio is represented by Li: Ni: Co: M = t: 1-x-y: x: y (wherein, M is at least one element selected from Mg and else , $0.95 \leqq t \leqq 1.20$, $0 < x \leqq 0.22$, and $0 \leqq y \leqq 0.15$), the coating layer comprises a lithium zirconium compound, and a ratio of a sum of substance quantities of Ni, Co, Zr and a substance quantity of Zr existing on a surface of the positive electrode active material is 0.80 or more and 0.97 or less.

FIG.1

**Description**

Background of the Invention

Field of the Invention

The present invention relates to a positive electrode active material for a lithium ion secondary battery, and a method for producing the positive electrode active material, and a lithium ion secondary battery using the positive electrode active material. This application is based upon and claims the benefit of priority from Japanese Patent Application No. 2020-100294 filed on June 9, 2020.

Description of Related Art

In recent years, there is a strong demand for a development of compact and lightweight secondary batteries having a high energy density, due to the widespread use of an electric vehicle. As such secondary batteries, there is a lithium ion secondary battery.

At present, in a general lithium ion secondary battery, oxides such as $LiCoO_2$, $LiNiO_2$, and $LiMn_2O_4$ are used as a positive electrode active material, and a lithium metal or a lithium alloy, a metal oxide, a carbon, or the like are used as a negative electrode active material, and an electrolyte solution in which a Li salt such as $LiClO_4$, $LiPF_6$, or the like are dissolved in an organic solvent such as ethylene carbonate, dimethyl carbonate, ethyl methyl carbonate, or the like as a supporting salt is used as an electrolyte solution.

Among components of a lithium ion secondary battery, especially an electrolyte solution is being a cause for limiting a performance of a battery such as a lifespan, a safety, or a high-speed charging, from a chemical property such as a heat resistance, a potential window, or the like. Therefore, at present, research and development have been conducted enthusiastically about an all-solid-state lithium ion secondary battery (hereinafter, also referred to as all-solid-state battery) in which a performance of the battery is improved by using a solid electrolyte instead of an electrolyte solution.

Among the research and development, it is proposed, for example in Patent Literature 1, that a solid electrolyte of sulfide is preferable to be used in an all-solid-state battery due to a high lithium ion conductivity. However, for example as disclosed in Non-Patent Literature 1, when an electrolyte of sulfide contacts a positive electrode active material of oxide, a reaction occurs at an interface between the electrolyte and the positive electrode active material, and a high resistive phase is generated to obstruct an operation of a battery. In order to inhibit a generation of this high resistive phase, it is proposed to provide a coating layer consisting of lithium zirconate on a surface of the positive electrode active material, for example in Non-Patent Literature 2.

On the other hand, in order to achieve a high energy density of a lithium ion secondary battery, it is preferable to use positive electrode active materials with high Ni content such as $LiNi_{0.08}Co_{0.15}Al_{0.05}O_2$ and $LiNi_{0.6}Co_{0.2}Mn_{0.2}O_2$, or $LiNiO_2$ with high charge and discharge capacity, and as a result of searching an applicability of positive electrode active materials with high Ni composition to an all-solid-state battery, the inventors have found that an energy density obtained from these positive electrode active materials is lower than an energy density expected from a lithium ion secondary battery using a conventional electrolyte solution.

Patent Literature 1: JP 2014-56661 A
Non-Patent Literature 1: Narumi Ohta et al., "LiNbO3-coated LiCoO2 as cathode material for all solid-state lithium secondary batteries", Electrochemistry Communications 9 (2007) 1486-1490
Non-Patent Literature 2: Seitaro Ito et al., "A rocking chair type all-solid-state lithium ion battery adopting Li2O-ZrO2 coated LiNi0. 8Co0. 15Al0. 0502 and a sulfide based electrolyte", Journal of Power Sources 248 (2014) 943-950

Summary of the Invention

Here, considering the above problems, a purpose of the present invention is to provide a positive electrode active material having a charge and discharge capacity equal to a charge and discharge capacity shown by a lithium ion secondary battery using an electrolyte solution, even when it is used in a positive electrode of an all-solid-state battery, and a method for producing the positive electrode active material. In addition, the purpose of the present invention is to provide an all-solid-state lithium ion secondary battery having a charge and discharge capacity equal to a charge and discharge capacity shown by a lithium ion secondary battery using an electrolyte solution.

A positive electrode active material for lithium ion secondary battery relating to one embodiment of the present invention is a positive electrode active material for a lithium ion secondary battery comprising particles of a lithium transition metal composite oxide and a coating layer for coating at least a part of a surface of the particles, wherein, in the lithium transition metal composite oxide, a substance quantity ratio of Li and transition metals is represented by Li:

Ni: Co: M = t: 1-x-y: x: y (wherein, M is at least one element selected from a group consisting of Mg, Al, Ca, Si, Mn, Ti, V, Fe, Cu, Cr, Zn, Zr, Nb, Mo and W, $0.95 \leqq t \leqq 1.20$, $0 < x \leqq 0.22$, and $0 \leqq y \leqq 0.15$), the coating layer comprises a lithium zirconium compound, and a ratio Zrs/(Nis+Cos+Zrs) of a sum Nis+Cos+Zrs of substance quantities of Ni, Co, Zr and a substance quantity Zrs of Zr existing on a surface of the positive electrode active material for the lithium ion secondary battery is 0.80 or more and 0.97 or less.

In this way, a positive electrode active material for an all-solid-state lithium ion secondary battery (hereinafter, also referred to as "positive electrode active material") showing a charge and discharge capacity equal to a charge and discharge capacity shown by a lithium ion secondary battery using an electrolyte solution is provided.

Here, in one embodiment of the present invention, a Zr content of the coating layer per 1 $m^2$ of a surface area of the lithium transition metal composite oxide without the coating layer may be 0.13 mmol or more and 0.30 mmol or less.

In this way, the coating layer is arranged uniformly on entire surface of particles of the lithium transition metal composite oxide. And, a decrease of a discharge capacity of the lithium ion secondary battery (hereafter, also referred to as "secondary battery") using the positive electrode active material is inhibited.

Here, in one embodiment of the present invention, the lithium transition metal composite oxide may be having a crystal structure pertaining to a space group R-3m.

In this way, an internal resistance of the lithium ion secondary battery using the positive electrode active material for the lithium ion secondary battery is inhibited.

Here, in one embodiment of the present invention, a carbon content of the positive electrode active material for the lithium ion secondary battery may be 0.05 mass% or more and 0.40 mass% or less.

In this way, a conduction of lithium ions at an interface between the positive electrode active material and a solid electrolyte is hardly obstructed, and an increase of an interface resistance between the positive electrode active material and the solid electrolyte is inhibited.

Here, in one embodiment of the present invention, a volume average particle size of the particles of the lithium transition metal composite oxide may be 2 micrometer or more and 20 micrometer or less.

In this way, a battery capacity per volume of the lithium ion secondary battery will be sufficiently large, and also, excellent battery characteristics such as a high output and a high safety are obtained.

Also, in one embodiment of the present invention, a lithium ion secondary battery comprises at least a positive electrode using the positive electrode active material for the lithium ion secondary battery, a negative electrode, and a solid electrolyte.

In this way, an all-solid-state lithium ion secondary battery having a charge and discharge capacity equal to a charge and discharge capacity shown by a lithium ion secondary battery using an electrolyte solution is provided.

Also, one embodiment of the present invention is a method for producing a positive electrode active material for a lithium ion secondary battery comprising particles of a lithium transition metal composite oxide and a coating layer for coating at least a part of a surface of the particles, the method comprising: a precursor crystallization process for preparing a transition metal composite hydroxide which is a precursor of the lithium transition metal composite oxide by a crystallization reaction; an oxidation roasting process for obtaining a transition metal composite oxide by oxidizing and roasting the transition metal composite hydroxide obtained in the precursor crystallization process; a lithium transition metal composite oxide synthesizing process for obtaining the lithium transition metal composite oxide by mixing the transition metal composite oxide obtained in the oxidation roasting process with a lithium compound to prepare a mixture and by firing the mixture; and a coating process for forming the coating layer containing a lithium zirconium compound on at least a part of a surface of the particles of the lithium transition metal composite oxide obtained in the lithium transition metal composite oxide synthesizing process, wherein, in the coating process, the particles of the lithium transition metal composite oxide obtained in the lithium transition metal composite oxide synthesizing process and a coating agent containing a lithium compound and a zirconium compound are mixed, dried, and heat-treated.

In this way, an all-solid-state lithium ion secondary battery having a charge and discharge capacity equal to a charge and discharge capacity shown by a lithium ion secondary battery using an electrolyte solution is provided.

Here, in one embodiment of the preset invention, in the lithium transition metal composite oxide synthesizing process, the mixture may be fired at a temperature of 700°C or more and 800°C or less in an oxidizing atmosphere.

In this way, a crystal structure of the lithium transition metal composite oxide will be grown sufficiently, and also, a cation mixing is inhibited and a deterioration of a battery characteristic of the secondary battery is prevented.

Here, in one embodiment of the present invention, in the coating process, the zirconium compound is added such that a Zr amount of the lithium zirconium compound will be 0.13 mmol or more and 0.30 mmol or less per 1 $m^2$ of a surface area of the lithium transition metal composite oxide, and components other than oxygen of the lithium transition metal composite oxide obtained in the coating process are represented by Li: Ni: Co: M = t: 1-x-y: x: y (wherein, M is at least one element selected from a group consisting of Mg, Al, Ca, Si, Mn, Ti, V, Fe, Cu, Cr, Zn, Zr, Nb, Mo and W, 0.95 $^t^$ 1.20, $0 < x \leqq 0.22$, and $0 \leqq y \leqq 0.15$), and a ratio Zrs/(Nis+Cos+Zrs) of a sum Nis+Cos+Zrs of substance quantities of Ni, Co, Zr and a substance quantity Zrs of Zr existing on a surface of the positive electrode active material for the lithium ion secondary battery may be 0.80 or more.

In this way, the coating layer is arranged uniformly on entire surface of the particles of the lithium transition metal composite oxide. And, an increase of an interface resistance between the positive electrode active material and a solid electrolyte is inhibited. Also, a decrease of a discharge capacity of the lithium ion secondary battery using the positive electrode active material is inhibited.

Here, in one embodiment of the present invention, in the coating process, the lithium compound and the zirconium compound may be added such that a substance quantity ratio (Li/Zr) of Li and Zr in the lithium zirconium compound of the coating layer will be 1.8 or more and 2.2 or less.

In this way, an all-solid-state lithium ion secondary battery having a charge and discharge capacity equal to a charge and discharge capacity shown by a lithium ion secondary battery using an electrolyte solution is provided.

Here, in one embodiment of the present invention, the coating agent may comprise a mixture of the lithium compound and the zirconium compound with low melting point to melt by a heat treatment of the coating process, or which is a liquid at a room temperature, and also, a solution in which the lithium compound and the zirconium compound to be used in the coating process are dissolved in a solvent.

In this way, the coating layer is arranged more uniformly on entire surface of the particles of the lithium transition metal composite oxide.

Here, in one embodiment of the present invention, the zirconium compound to be used in the coating process may be one or more of alkoxides such as zirconium tetrapropoxide and zirconium tetrabutoxide.

In this way, a mixing of impurities into the coating layer is inhibited.

Here, in one embodiment of the present invention, the heat treatment may be performed at a temperature of 300°C or more and 600°C or less in an oxidizing atmosphere for 1 hour or more and 5 hours or less.

In this way, the lithium zirconium compound will be contained in the coating layer, and also, a form of the coating layer is maintained. And, an all-solid-state lithium ion secondary battery having a charge and discharge capacity equal to a charge and discharge capacity shown by a lithium ion secondary battery using an electrolyte solution is provided.

According to the present invention, even when a positive electrode of an all-solid-state battery is used, a positive electrode active material having a charge and discharge capacity equal to a charge and discharge capacity shown by a lithium ion secondary battery using an electrolyte solution, and a method for producing the positive electrode active material, are provided. And an all-solid-state lithium ion secondary battery having a charge and discharge capacity equal to a charge and discharge capacity shown by a lithium ion secondary battery using an electrolyte solution is provided.

Brief Description of the Drawings

Fig. 1 is a flow chart illustrating an outline of a method for producing a positive electrode active material for a lithium ion secondary battery relating to one embodiment of the present invention.
Fig. 2 is a schematic diagram of a sectional structure of a battery for testing used for an evaluation of a battery characteristic.

Detailed Description of the Invention

By a keen examination for solving the above problems, the inventors have found that an all-solid-state lithium ion secondary battery having a charge and discharge capacity equal to a charge and discharge capacity shown by a lithium ion secondary battery using an electrolyte solution can be provided by coating at least a part of a lithium transition metal composite oxide with a coating layer containing a lithium zirconium compound, and by controlling an existing amount of zirconium per a surface area and an existing proportion of zirconium with respect to transition metal elements, and completed the present invention. Hereinafter explaining about preferred embodiments of the present invention.

Hereinafter, it is explained about the embodiments of the present invention, but the present invention should not be limited by the following embodiments, and various modifications and replacements can be made without departing from a scope of the present invention. Also, not all of configurations explained in the present embodiments are necessary as a means for solving the problem of the present invention.

Explaining about a positive electrode active material for a lithium ion secondary battery, a method for producing the positive electrode active material, and a lithium ion secondary battery relating to one embodiment of the present invention in a following order.

1. Positive electrode active material for lithium ion secondary battery

1-1. Particles of lithium transition metal composite oxide
1-2. Coating layer

1-3. Characteristics of positive electrode active material

2. Method for producing positive electrode active material for lithium ion secondary battery

2-1. Precursor crystallization process
2-2. Oxidation roasting process
2-3. Lithium transition metal composite oxide synthesizing process
2-4. Coating process

3. Lithium ion secondary battery

3-1. Positive electrode
3-2. Negative electrode
3-3. Solid electrolyte
3-4. Shape and structure of secondary battery
3-5. Characteristics of secondary battery

<1. Positive electrode active material for lithium ion secondary battery>

Explaining about one configuration example of a positive electrode active material for a lithium ion secondary battery of the present embodiment.

A positive electrode active material of the present embodiment comprises particles of a lithium transition metal composite oxide and a coating layer for coating at least a part of a surface of the particles. And, lithium transition metal composite oxide particles of a positive electrode active material for a lithium ion secondary battery of the present embodiment comprise a lithium (Li), a nickel (Ni), a cobalt (Co), and an element M (M) such that a substance quantity ratio will be Li: Ni: Co: M = t: 1-x-y: x: y. However, it is preferable to satisfy $0.95 \leq t \leq 1.20$, $0 < x \leq 0.22$, and $0 \leq y \leq 0.15$. Also, the element M is at least one element selected from a magnesium (Mg), an aluminum (Al), a calcium (Ca), a silicon (Si), a manganese (Mn), a titanium (Ti), a vanadium (V), an iron (Fe), a copper (Cu), a chromium (Cr), a zinc (Zn), a zirconium (Zr), a niobium (Nb), a molybdenum (Mo), and a tungsten (W).

The coating layer contains a lithium zirconium compound, and contains a zirconium in a proportion of 0.13 mmol or more and 0.30 mmol or less per 1 $m^2$ of a surface area of the lithium transition metal composite oxide before coating. Also, a lithium zirconate may be used as the lithium zirconium compound.

In the positive electrode active material for the lithium ion secondary battery of the present embodiment, a ratio (Zrs/(Nis+Cos+Zrs)) of a sum of substance quantities of Ni, Co, Zr and a substance quantity of Zr existing on a surface of the positive electrode active material is 0.80 or more and 0.97 or less.

Hereinafter, concretely explaining about the positive electrode active material for the lithium ion secondary battery of the present embodiment (hereinafter, also simply referred to as "positive electrode active material").

The positive electrode active material of the present embodiment comprises particles of a lithium transition metal composite oxide and a coating layer for coating at least a part of a surface of the particles of the lithium transition metal composite oxide. Hereinafter, explaining about the particles of the lithium transition metal composite oxide and the coating layer.

<1-1. Particles of lithium transition metal composite oxide>

Particles of a lithium transition metal composite oxide comprise a lithium (Li), a nickel (Ni), a cobalt (Co), and an element M such that a substance quantity ratio will be

$$Li: Ni: Co: M = t: 1\text{-}x\text{-}y: x: y.$$

In a formula representing a substance quantity ratio of each element in the lithium transition metal composite oxide, a value of t indicating a lithium (Li) content may be 0.95 or more and 1.20 or less, and preferably 0.98 or more and 1.10 or less, more preferably 1.00 or more and 1.10 or less.

By setting a value of t to be 0.95 or more, an internal resistance of a secondary battery using a positive electrode active material containing the lithium transition metal composite oxide will be inhibited, and an output characteristic will be improved. Also, by setting a value of t to be 1.20 or less, an initial discharge capacity of a secondary battery using a positive electrode active material containing the lithium transition metal composite oxide will be maintained to be high. In other words, by setting a value of t to be in the above range, an output characteristic and a capacity characteristic of a secondary battery using a positive electrode active material containing the lithium transition metal composite oxide will be improved.

A nickel (Ni) of the lithium transition metal composite oxide is an element contributing to enable a high capacity of a secondary battery using a positive electrode active material containing the lithium transition metal composite oxide.

A cobalt (Co) of the lithium transition metal composite oxide is an element contributing to decrease an irreversible capacity of a secondary battery using a positive electrode active material containing the lithium transition metal composite oxide. A value of x indicating a cobalt content may be more than 0 and 0.22 or less, and preferably 0.10 or more and 0.22 or less, more preferably 0.10 or more and 0.20 or less.

By setting a value of x to be more than 0, an irreversible capacity which is a difference of a charge capacity and a discharge capacity will be decreased in a secondary battery using a positive electrode active material containing the lithium transition metal composite oxide. Also, by setting a value of x to be 0.22 or less, a high battery capacity is obtained.

Also, the lithium transition metal composite oxide may comprise an additive element of an element M in addition to the above metal elements. As the element M, at least one element selected from a magnesium (Mg), an aluminum (Al), a calcium (Ca), a silicon (Si), a manganese (Mn), a titanium (Ti), a vanadium (V), an iron (Fe), a copper (Cu), a chromium (Cr), a zinc (Zn), a zirconium (Zr), a niobium (Nb), a molybdenum (Mo), and a tungsten (W) may be used. The element M is selected accordingly according to a required performance or an application of a secondary battery configured by using the positive electrode active material.

The element M itself may not contribute to an oxidation-reduction reaction, so a value of y indicating a content of the element M may be 0.15 or less, and preferably 0.10 or less, more preferably 0.05 or less. The lithium transition metal composite oxide may not comprise the element M, so a lower limit value of y indicating a content of the element M may be 0.

In lithium transition metal composite oxide particles, it is preferable that a peak pertaining to a layered rock-salt type crystal structure of "R-3m" structure is detected from a diffraction pattern obtained when performing an X-ray diffraction (XRD) measurement. Especially, it is preferable that only a peak pertaining to the layered rock-salt type crystal structure of "R-3m" structure is detected from the diffraction pattern. This is because the layered rock-salt type crystal structure of "R-3m" structure is preferable as it especially inhibit an internal resistance when the positive electrode active material containing the lithium transition metal composite oxide is used in a secondary battery.

However, the lithium transition metal composite oxide with the layered rock-salt type crystal structure may not be obtained in a single phase, and impurities may be mixed in. Even when the impurities have mixed in, it is preferable that a different phase peak intensity other than the layered rock-salt type crystal structure of "R-3m" structure does not exceed a peak intensity pertaining to the layered rock-salt type crystal structure of "R-3m" structure.

When observed by using an electron microscope such as SEM and TEM, the particles of the lithium transition metal composite oxide are preferably secondary particles with a particle size of 3.0 micrometer or more and 15.0 micrometer or less respectively formed by aggregating numerous primary particles with a particle size of 0.1 micrometer or more and 2.0 micrometer or less, sole primary particles with a particle size of 1.0 micrometer or more and 7.0 micrometer or less, or a mixture thereof. At inside of each of these particles, there may be a space or a gap surrounded by one or more primary particles.

A volume average particle size of the particles of the lithium transition metal composite oxide of the present embodiment is preferably 2 micrometer or more and 20 micrometer or less, more preferably 2 micrometer or more and 15 micrometer or less, furthermore preferably 3 micrometer or more and 15 micrometer or less, when measured by a laser diffraction scattering particle size analyzer. This is because, when a volume average particle size of the particles of the lithium transition metal composite oxide is 2 micrometer or more and 20 micrometer or less, a battery capacity per volume will be sufficiently large in a secondary battery using the positive electrode active material containing the lithium transition metal composite oxide as a positive electrode, and also, excellent battery characteristics such as a high output and a high safety are obtained.

<1-2. Coating layer>

A coating layer comprises a compound containing a zirconium, i.e. a zirconium compound, and coats at least a part of the particles of the lithium transition metal composite oxide. The coating layer may be formed from a lithium zirconium compound, for example lithium zirconate or the like. By arranging the coating layer, in a secondary battery having a positive electrode containing the positive electrode active material of the present embodiment, an increase of an interface resistance between the positive electrode active material and a solid electrolyte is inhibited.

The coating layer and the particles of the lithium transition metal composite oxide do not need to have a clear boundary. Therefore, the coating layer is indicating an area or a part where a zirconium concentration is higher than which of the particles of the lithium transition metal composite oxide to be coated, i.e. a central area, in a surface side area of the positive electrode active material of the present embodiment. The coating layer may be partly solid-solved with the lithium transition metal composite oxide.

A zirconium content in the coating layer is not limited particularly, but it is preferable to adjust the zirconium content according to a specific surface area of the particles of the lithium transition metal composite oxide to be coated. Concretely, for example, the coating layer preferably contains a zirconium in a proportion of 0.13 mmol or more and 0.30 mmol or less, more preferably contains a zirconium in a proportion of 0.15 mmol or more and 0.25 mmol or less, per 1 $m^2$ of a surface area of the particles of the lithium transition metal composite oxide.

This is because, by setting a zirconium content per 1 $m^2$ of a surface area (specific surface area) of the particles of the lithium transition metal composite oxide to be 0.13 mmol or more, it is shown that the coating layer will be arranged uniformly on entire surface of the particles of the lithium transition metal composite oxide.

Also, an increase of an interface resistance between the positive electrode active material and the solid electrolyte is inhibited by arranging the coating layer, but an internal resistance will be increased at the same time, and also, there is a risk that a discharge capacity will be decreased. And, by setting a zirconium content per 1 $m^2$ of a surface area (specific surface area) of the particles of the lithium transition metal composite oxide to be 0.30 mmol or less, the coating layer is inhibited from being an obstruction for a reaction of intercalation/deintercalation of lithium into the lithium transition metal composite oxide, and an internal resistance is decreased, and also, a decrease of a discharge capacity is inhibited, so it is preferable.

A method for calculating and evaluating a zirconium content in the coating layer is not limited particularly, but an example of the method is indicated in below. At first, a zirconium content (mmol/g) in 1 g of the positive electrode active material after performing a coating treatment by a lithium zirconium compound is measured by a method of a chemical analysis or the like. For example, a measurement can be performed by an ICP (Inductively Coupled Plasma) emission spectrometry or the like. Also, a specific surface area ($m^2$/g) of the particles of the lithium transition metal composite oxide before the coating treatment by the lithium zirconium compound is measured by a BET method by a nitrogen adsorption or the like. And, by dividing a zirconium content (mmol/g) in 1 g of the positive electrode active material after performing the coating treatment by the lithium zirconium compound by a specific surface area ($m^2$/g) of the particles of the lithium transition metal composite oxide before the coating treatment, a zirconium content (mmol/$m^2$) per 1 $m^2$ of a surface area of the particles of the lithium transition metal composite oxide can be calculated.

Denominators are different between a zirconium content in 1 g of the positive electrode active material after performing the coating treatment by the lithium zirconium compound and a specific surface area of the particles of the lithium transition metal composite oxide before the coating treatment without the coating layer, so it is not an exact value, but an amount of zirconium used in a coating is small, so it can be used as a zirconium carrying amount per 1 $m^2$ of a surface area of the lithium transition metal composite oxide approximately.

When the particles of the lithium transition metal composite oxide before the coating treatment contain a zirconium, it is preferable to use a difference of a zirconium content before and after the coating treatment as an amount of zirconium used in the coating.

An extent of a coating area of the coating layer with respect to the particles of the lithium transition metal composite oxide can be known from a ratio Zrs/(Nis+Cos+Zrs) of a sum of substance quantities of Ni, Co, Zr and a substance quantity of Zr existing on a surface known from a semi-quantitative analysis by an X-ray photoelectron spectroscopy (XPS) (hereinafter, also referred to as "ratio of coating metal surface quantity").

Characteristically, XPS can obtain an information of 1 nm or more and 5 nm or less of a surface to be measured selectively, so a composition ratio of a surface layer of materials can be known. The ratio of coating metal surface quantity is preferably 0.80 or more. By setting the ratio of coating metal surface quantity to be 0.80 or more, a zirconium existing as the coating layer, i.e. a zirconium existing as the coating layer without diffusing to a side of the particles of the lithium transition metal composite oxide is sufficiently secured, and it means that a coating layer uniform enough to be able to inhibit an increase of an interface resistance between the positive electrode active material and the solid electrolyte is formed. When the ratio of coating metal surface quantity is 0.85 or more, especially an increase of an interface resistance between the positive electrode active material and the solid electrolyte can be more inhibited, so it is more preferable.

By introducing a lithium into the coating layer to form a lithium zirconium compound such as lithium zirconate, a lithium ion conductivity will be improved more than when a zirconium compound is used as a coating layer, and an internal resistance will be decreased, and also, a decrease of a discharge capacity will be inhibited.

A substance quantity ratio (Li/Zr) of Li and Zr in the lithium zirconium compound of the coating layer will be preferably 1.8 or more and 2.2 or less. By setting a substance quantity ratio of Li and Zr in the lithium zirconium compound of the coating layer to be 1.8 or more, a lithium zirconium compound with high lithium ion conductivity will be formed, so it is preferable. Also, by setting a substance quantity ratio of Li and Zr in the lithium zirconium compound of the coating layer to be 2.2 or less, unreacted lithium compounds will be decreased, and a decrease of battery characteristics such as a decrease of an initial discharge capacity and an increase of a positive electrode resistance will be inhibited. Also, by setting a substance quantity ratio of Li and Zr in the lithium zirconium compound of the coating layer to be 1.8 or more and 2.2 or less, an increase of an interface resistance between the positive electrode active material and the solid electrolyte will be inhibited.

<1-3. Characteristics of positive electrode active material>

In the above, it was explained about the particles of the lithium transition metal composite and the coating layer, but it is preferable that the positive electrode active material of the present embodiment is having following characteristics.

It is preferable that the positive electrode active material of the present embodiment is configured only from the particles of the lithium transition metal composite and the coating layer, but impurities may be mixed in when producing the positive electrode active material. Especially, a moisture and a carbon are impurities with a possibility to be increased by the coating treatment. A moisture and a carbon may have an effect on an initial discharge capacity, so it is preferable that a content thereof is controlled in a predetermined range.

In the positive electrode active material of the present embodiment, a carbon content is preferably 0.05 mass% or more and 0.40 mass% or less, more preferably 0.05 mass% or more and 0.08 mass% or less. By setting a carbon content to be 0.40 mass% or less, a conduction of lithium ions at an interface between the positive electrode active material and a solid electrolyte is hardly hindered, and an increase of an interface resistance between the positive electrode active material and the solid electrolyte will be inhibited. However, a carbon will be mixed into the positive electrode active material of the present embodiment due to carbon dioxide or the like in an air, so a carbon content is difficult to be less than 0.01 mass%. Therefore, a lower limit value of a carbon content is preferably 0.05 mass%. Here, a carbon content of the positive electrode active material represents a mass% of a content of a carbon with respect to entire positive electrode active material. A carbon content of the positive electrode active material of the present embodiment can be evaluated, for example by an infrared absorbing method or the like.

Also, in the positive electrode active material of the present embodiment, a moisture quantity (moisture content) is preferably 0.08 mass% or less. By setting a moisture quantity to be 0.08 mass% or less, in a secondary battery using the positive electrode active material, a hydrolysis reaction of the solid electrolyte will be inhibited more surely.

When the solid electrolyte is hydrolyzed, hydrogen sulfide will be generated, and deteriorated to decrease a lithium ion conductivity. However, by setting a moisture quantity of the positive electrode active material of the present embodiment to be 0.08 mass% or less as the above, a hydrolysis reaction of the solid electrolyte will be inhibited more surely, and a deterioration will be inhibited, so it is preferable. A moisture quantity of the positive electrode active material of the present embodiment can be evaluated, for example by a Karl Fischer method with a heating temperature of 300°C.

According to the positive electrode active material for the lithium ion secondary battery relating to one embodiment of the present invention, an all-solid-state lithium ion secondary battery having a charge and discharge capacity approximately equal to a charge and discharge capacity shown by a lithium ion secondary battery using an electrolyte solution is provided.

<2. Method for producing positive electrode active material for lithium ion secondary battery>

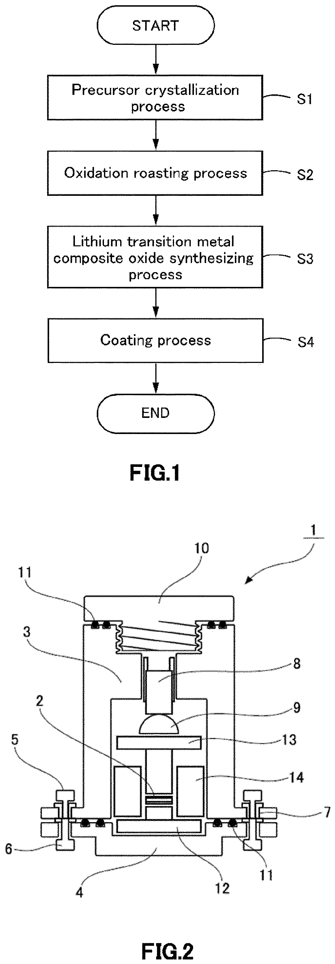

Next, explaining about a method for producing a positive electrode active material for a lithium ion secondary battery relating to one embodiment of the present invention using drawings. Fig. 1 is a flow chart illustrating an outline of a method for producing a positive electrode active material for a lithium ion secondary battery relating to one embodiment of the present invention. A method for producing a positive electrode active material for a lithium ion secondary battery relating to one embodiment of the present invention is a method for producing a positive electrode active material for a lithium ion secondary battery comprising particles of a lithium transition metal composite oxide and a coating layer for coating at least a part of a surface of the particles.

As illustrated in Fig. 1, a method for producing the positive electrode active material relating to one embodiment of the present invention comprises four processes as below.

First process: [Precursor crystallization process S1]

In a precursor crystallization process S 1, a transition metal composite hydroxide which is a precursor of a lithium transition metal composite oxide is prepared by a crystallization reaction. Concretely, for example, a mixed aqueous solution is prepared by using water-soluble raw materials such that a substance quantity ratio of each element will be Ni: Co: M = 1-x-y: x: y, and reacted with alkaline metal aqueous solution in a reaction tank to obtain the transition metal composite hydroxide. In addition, about x and y in the above formula, they may be in a suitable range similar to x and y explained in the particles of the lithium transition metal composite oxide.

Second process: [Oxidation roasting process S2]

In an oxidation roasting process S2, a transition metal composite oxide is prepared. Concretely, for example, the transition metal composite hydroxide obtained in the precursor crystallization process S1 is fired at a temperature of 500°C or more and 700°C or less in an oxidizing atmosphere to obtain the transition metal composite oxide.

Third process: [Lithium transition metal composite oxide synthesizing process S3]

In a lithium transition metal composite oxide synthesizing process S3, the transition metal composite oxide obtained in the oxidation roasting process S2 is mixed with a lithium compound, and fired at a temperature of 700°C or more and 800°C or less in an oxidizing atmosphere to obtain the lithium transition metal composite oxide.

Fourth process: [Coating process S4]

In a coating process S4, a coating layer is formed on a surface of particles of the lithium transition metal composite oxide. Concretely, for example, the particles of the lithium transition metal composite oxide obtained in the lithium transition metal composite oxide synthesizing process S3 are mixed with a liquid coating agent containing a lithium compound and a zirconium compound, and dried, and then, heat-treated at a temperature of 300°C or more and 600°C or less in an oxidizing atmosphere to provide the coating layer on a surface of the particles of the lithium transition metal composite oxide.

Hereinafter, explaining more concretely about one configuration example of the method for producing the positive electrode active material of the present embodiment. In addition, following explanation is an example of a production method and it will not limit the production method.

<2-1. Precursor crystallization process S1>

In a precursor crystallization process S1, at first, a metal compound containing a nickel, a metal compound containing a cobalt, and further, optionally a metal compound containing an element M (M is at least one element selected from a group consisting of Mg, Al, Ca, Si, Mn, Ti, V, Fe, Cu, Cr, Zn, Zr, Nb, Mo and W) are dissolved in a water in a predetermined proportion to prepare a mixed aqueous solution (mixed aqueous solution preparation step). A composition ratio of each metal in the mixed aqueous solution will be similar to a composition ratio of each metal in finally obtained transition metal composite hydroxide. Therefore, it is preferable that the mixed aqueous solution is prepared such that a composition ratio of each metal in the mixed aqueous solution will be same as a composition ratio of each metal in aimed transition metal composite hydroxide particles by adjusting a proportion of metal compounds to be dissolved in a water. The metal compounds should be soluble to water and sulfate, chloride, nitrate, and else may be used, but from a point of view of a cost, sulfate is preferable. In addition, if water-soluble suitable raw materials are not found in the element M and else, they may not be added to the mixed aqueous solution, and they may be added in the following oxidation roasting process S2 or lithium transition metal composite oxide synthesizing process S3.

Next, a water is poured in a reaction tank, and an alkaline substance and an ammonium ion supplier are added for a proper quantity to prepare an initial aqueous solution (initial aqueous solution preparation step). At this time, it is preferable to prepare such that a pH value of the initial aqueous solution will be 11.2 or more and 12.2 or less on the basis of a liquid temperature of 25°C, and that an ammonia concentration of the initial aqueous solution will be 2 g/L or more and 15 g/L or less.

When performing the precursor crystallization process S1 to prepare the transition metal composite hydroxide, impurities derived from anions consisting the metal compounds contained in the mixed aqueous solution used may be mixed in the transition metal composite hydroxide. However, by setting a pH value of the initial aqueous solution to be 11.2 or more, a mixing of impurities derived from anions consisting the metal compounds of the raw materials is inhibited, so it is preferable. Also, by setting a pH value of the initial aqueous solution to be 12.2 or less, obtained transition metal composite hydroxide particles will be inhibited from being fine particles, and will be in a most suitable size, so it is preferable.

Also, by setting an ammonia concentration of the initial aqueous solution to be 2 g/L or more, obtained transition metal composite hydroxide particles will tend to be in a spherical shape, so it is preferable. And, by setting an ammonia concentration of the initial aqueous solution to be 15 g/L or less, a solubility of transition metals forming an ammonia complex is prevented from excessively increasing, and a composition of obtained transition metal composite hydroxide will be an aimed composition more surely, so it is preferable.

In addition, the alkaline substance used when preparing the initial aqueous solution is not limited particularly, but it is preferably one or more substance selected from sodium carbonate, sodium hydrogen carbonate, potassium carbonate, sodium hydrate, and potassium hydrate. It is preferable to add in a form of an aqueous solution, as it is easy to adjust an addition amount. Also, the ammonium ion supplier is not limited particularly, but it is preferable to use one or more solution selected from ammonium carbonate aqueous solution, ammonia water, ammonium chloride aqueous solution, and ammonium sulfate aqueous solution.

In the precursor crystallization process S 1, the mixed aqueous solution is dropped into the initial aqueous solution to be a reaction aqueous solution, but also in the reaction aqueous solution, it is preferable that a pH value and an ammonia concentration will be maintained in the above suitable range.

It is preferable that an atmosphere in the reaction tank will be a non-oxidizing atmosphere, for example an atmosphere with an oxygen concentration of 1 volume% or less. This is because, by setting to be a non-oxidizing atmosphere, for example an atmosphere with an oxygen concentration of 1 volume% or less, raw materials and else are inhibited from being oxidized, and it is preferable. Therefore, for example, a deposition of oxidized cobalt as fine particles is prevented.

A temperature of the reaction tank in the precursor crystallization process S 1 is preferably maintained at 40°C or more and 60°C or less, more preferably maintained at 45°C or more and 55°C or less. In addition, in order to maintain the reaction tank in the above temperature range, the initial aqueous solution and the reaction aqueous solution to be provided in the reaction tank are also preferably maintained in a similar temperature range.

A temperature of the reaction tank will rose naturally by a reaction heat and an energy of stirring, so by setting a temperature of the reaction tank to be at 40°C or more, an excess energy will not be consumed for cooling, so it is preferable. Also, by setting a temperature of the reaction tank to be at 60°C or less, an evaporation amount of ammonia from the initial aqueous solution and the reaction aqueous solution is inhibited, and an aimed ammonia concentration is easily maintained, so it is preferable.

And, in the precursor crystallization process S1, the initial aqueous solution is poured into the reaction tank, and after adjusting a temperature and else, the mixed aqueous solution is dropped into the reaction tank at a constant rate to be the reaction aqueous solution, so a crystallization of transition metal composite hydroxide particles, i.e. precursors, is performed (crystallization step).

As described in the above, also in the reaction aqueous solution, it is preferable that a pH value and an ammonia concentration are in a similar suitable range as explained about the initial aqueous solution. Therefore, also when dropping the mixed aqueous solution into the initial aqueous solution or the reaction aqueous solution, it is preferable that the ammonium ion supplier and the alkaline substance are also dropped into the initial aqueous solution or the reaction aqueous solution at a constant rate. And, a pH value of the reaction aqueous solution is preferably controlled to be maintained to 11.2 or more and 12.2 or less on the basis of a liquid temperature of 25°C, and an ammonia concentration of the reaction aqueous solution is preferably controlled to be maintained to 2 g/L or more and 15 g/L or less.

Then, a slurry containing the transition metal composite hydroxide particles collected by an overflow port arranged at the reaction tank is filtered, and dried to obtain powdery transition metal composite hydroxide particles which are precursors.

<2-2. Oxidation roasting process S2>

Next, explaining about an oxidation roasting process S2. In the oxidation roasting process S2, the transition metal composite hydroxide obtained in the precursor crystallization process S1 is oxidized and roasted to obtain a transition metal composite oxide. In the oxidation roasting process S2, the transition metal composite hydroxide prepared in the precursor crystallization process S1 is fired in an oxidizing atmosphere, and then, cooled to a room temperature to obtain the transition metal composite oxide.

A roasting condition in the oxidation roasting process S2 is not limited, but it is preferable to fire at a temperature of 500°C or more and 700°C or less for 1 hour or more and 12 hours or less in an oxidizing atmosphere, for example an air atmosphere. This is because, by setting a firing temperature to be at 500°C or more, the transition metal composite hydroxide particles are completely converted into the transition metal composite oxide, and it is preferable. Also, by setting a firing temperature to be at 700°C or less, a specific surface area of the transition metal composite oxide is inhibited from being excessively small, so it is preferable.

By setting a firing time to be 1 hour or more, a temperature in a firing vessel can be particularly uniform, and a reaction can be progressed uniformly, so it is preferable. Also, even by roasting for a time longer than 12 hours, there is no significant change in a physical property of the transition metal composite oxide obtained, so from a point of view of energy efficiency, a firing time is preferably 12 hours or less.

An oxygen concentration in an oxidizing atmosphere when firing is preferably 20 volume% or more, in other words, equal to or more than an oxygen concentration of an air atmosphere. It may be an oxygen atmosphere, so an upper limit of an oxygen concentration of an oxidizing atmosphere may be 100 volume%.

In addition, for example, when a compound containing the element M was not coprecipitated in the precursor crystallization process S1, the compound containing the element M may be added, for example to the transition metal composite hydroxide used in the oxidation roasting process S2, such that a composition ratio will be same as the aimed composition ratio, and fired. The compound containing the element M to be added is not limited particularly, and for example, oxide, hydroxide, carbonate, a mixture thereof, or the like may be used.

After an end of the oxidation roasting process S2, when a small amount of sintering was found in the transition metal composite oxide particles, a crushing treatment may be added.

<2-3. Lithium transition metal composite oxide synthesizing process S3>

In a lithium transition metal composite oxide synthesizing process S3, the transition metal composite oxide obtained in the oxidation roasting process S2 and a lithium compound are mixed and fired to obtain a lithium transition metal composite oxide.

In the lithium transition metal composite oxide synthesizing process S3, at first, a lithium compound is added and mixed to the transition metal composite oxide particles obtained in the oxidation roasting process S2 such that a substance quantity of lithium will be 95% or more and 120% or less with respect to a sum of substance quantities of component metal elements contained in the transition metal composite oxide particles to obtain a lithium mixture (lithium mixture preparation step).

The lithium compound to be added is not limited particularly, but for example, lithium hydroxide, lithium nitrate, lithium carbonate, a mixture thereof, or the like may be used. As the lithium compound, especially it is preferable to use lithium hydroxide with a high reactivity and a low melting point.

Next, the lithium mixture obtained is fired in an oxidizing atmosphere, and then, cooled to a room temperature to obtain a lithium transition metal composite oxide containing lithium (firing step). A firing condition is not limited particularly, but for example, it is preferable to fire at a temperature of 700°C or more and 800°C or less for 1 hour or more and 24 hours or less.

In addition, an oxidizing atmosphere is preferably an atmosphere containing an oxygen for 80 volume% or more. This is because, by setting an oxygen concentration in an atmosphere to be 80 volume% or more, especially a cation mixing in which Ni atoms are mixed to Li site in the lithium transition metal composite oxide obtained is inhibited, and a deterioration of battery characteristics of a secondary battery is prevented, and it is preferable. It may be an oxygen atmosphere, so an upper limit of an oxygen concentration of an oxidizing atmosphere may be 100 volume%.

And, by setting a firing temperature to be at 700°C or more, a crystal structure of the lithium transition metal composite oxide will be stable, and also, particles of the lithium transition metal composite oxide will be grown sufficiently, so it is preferable. Also, by setting a firing temperature to be at 800°C or less, a cation mixing in which Ni atoms are mixed to Li site in the lithium transition metal composite oxide obtained is inhibited, and a deterioration of battery characteristics of a secondary battery is prevented, so it is preferable.

By setting a firing time to be 1 hour or more, a temperature in the firing vessel will be uniform, and a reaction will be progressed uniformly, so it is preferable. Also, even by firing for a time longer than 24 hours, there is no significant change in a physical property of the lithium transition metal composite oxide obtained, so from a point of view of energy efficiency, a firing time is preferably 24 hours or less.

In addition, after the lithium transition metal composite oxide synthesizing process S3, when a small amount of sintering was found in the lithium transition metal composite oxide obtained, a crushing treatment may be added. By crushing, an average particle size and a particle size distribution of obtained positive electrode active material will be adjusted to be in a suitable range. In addition, a crushing means an operation to deaggregate an aggregate consisting of a plurality of secondary particles generated by a sintering necking between secondary particles at the time of firing or the like, by separating secondary particles without hardly destroying the secondary particles themselves, by supplying a mechanical energy to the aggregate.

<2-4. Coating process S4>

In a coating process S4, a coating layer comprising a lithium zirconium compound is formed on at least a part of a surface of the particles of the lithium transition metal composite oxide obtained in the lithium transition metal composite oxide synthesizing process S3.

In the coating process S4, at first, a specific surface area of the lithium transition metal composite oxide obtained in the lithium transition metal composite oxide synthesizing process S3 is measured, and a liquid coating agent is prepared according to a zirconium carrying amount of an aimed coating layer (coating agent preparation step).

In the coating agent preparation step, a coating agent containing a zirconium compound and a lithium compound is prepared. By using the coating agent containing the zirconium compound and the lithium compound, the coating layer containing a lithium zirconium compound will be formed in following heat treatment step. And, a surface of the particles of the lithium transition metal composite oxide will be coated uniformly by the coating layer. In addition, a coating agent may be a zirconium compound, and a lithium compound may be added after following drying step, and then, following heat treatment step may be performed, but there is a possibility that the lithium compound will be released at the time of the heat treatment step.

The coating agent is not limited particularly as long as it contains a zirconium or a zirconium compound, and a lithium compound. For a uniform coating, a zirconium compound and a lithium compound with low melting point to be melted in low temperature heat treatment, and which is in liquid state at a room temperature, or a zirconium compound and a lithium compound dissolved in a solvent may be used preferably as the coating agent.

As a zirconium compound, for example, one or more selected from alkoxides such as zirconium tetrapropoxide and zirconium tetrabutoxide, chelates such as zirconium tetraacetylacetonate, a zirconium oxide sol aqueous solution in which fine particles of zirconium oxide are dispersed uniformly in an aqueous solution, zirconium carbonate ammonium, or the like may be cited. A lithium compound is not limited particularly, but for example, lithium hydroxide, lithium oxide, lithium nitrate, lithium ethoxide, lithium formate, lithium chloride, lithium sulfate, lithium carbonate, a mixture thereof, or the like may be used. As the coating agent, especially zirconium tetrapropoxide and lithium ethoxide dissolved in a mixed solution with ethanol may be used preferably, as it can be prepared easily and a mixing of impurities is inhibited.

In the coating agent preparation step, it is preferable that an addition amount of a zirconium compound and a lithium compound is adjusted such that a substance quantity ratio (Li/Zr) of Li and Zr of a lithium zirconium compound of the coating layer will be 1.8 or more and 2.2 or less. By setting a substance quantity ratio of Li and Zr of the lithium zirconium compound of the coating layer to be 1.8 or more, the lithium zirconium compound with high lithium ion conductivity is formed, so it is preferable. Also, by setting a substance quantity ratio of Li and Zr of the lithium zirconium compound of the coating layer to be 2.2 or less, unreacted lithium compounds will be decreased, and a decrease of a battery characteristics such as a decrease of an initial discharge capacity and an increase of a positive electrode resistance will be inhibited. Also, by setting a substance quantity ratio (Li/Zr) of Li and Zr of the lithium zirconium compound of the coating layer to be 1.8 or more and 2.2 or less, an increase of an interface resistance between the positive electrode active material and a solid electrolyte will be inhibited.

In the coating process S4, next, lithium transition metal composite oxide particles and the coating agent will be mixed. A general mixer may be used for a mixing (mixture preparation step). And, it will be dried after the mixing (drying step), and further, heat-treated to fix the lithium zirconium compound as the coating layer (heat treatment step).

In the drying step, it may be dried at a temperature to the extent that a solvent of the coating agent will be removed. For example, it may be dried at a temperature of 80°C or more and less than 300°C.

A heat treatment condition of the heat treatment step is not limited particularly, but it is preferable to perform a heat treatment for 1 hour or more and 5 hours or less at a temperature of 300°C or more and 600°C or less, more preferably 300°C or more and 450°C or less, in an oxidizing atmosphere, for example in an air atmosphere. After the heat treatment, it will be cooled until a room temperature to obtain a final product of a positive electrode active material which is the particles of the lithium transition metal composite oxide having the coating layer.

An oxygen concentration in an oxidizing atmosphere at the time of heat treatment is preferably 20 volume% or more, in other words, equal to or more than an oxygen concentration of an air atmosphere. By setting the oxygen concentration at the time of heat treatment to be equal to or more than an oxygen concentration of an air atmosphere, especially an occurrence of an oxygen defect in the positive electrode active material obtained will be inhibited, so it is preferable. It may be an oxygen atmosphere, so an upper limit of an oxygen concentration of an oxidizing atmosphere may be 100 volume%.

By setting a firing temperature at the time of heat treatment to be 300°C or more, especially impurities contained in the coating agent are inhibited from remaining in the positive electrode active material, and also, the zirconium compound and the lithium compound of the coating layer are reacted to be existed as the lithium zirconium compound, so it is preferable. Also, by setting a firing temperature at the time of heat treatment to be 600°C or less, components of the coating layer will be inhibited from being dispersed excessively, and a figuration of the coating layer will be maintained, so it is preferable. In addition, a firing temperature at the time of heat treatment is preferably selected to maintain a thickness of the coating layer sufficiently according to an aimed zirconium carrying amount of the coating layer or the like.

By setting a firing time of the heat treatment to be 1 hour or more, especially impurities contained in the coating agent are inhibited from remaining in the positive electrode active material, so it is preferable. Also, even by firing for a time longer than 5 hours, there is no significant change in the lithium transition metal composite oxide obtained, so from a point of view of energy efficiency, a firing time is preferably 5 hours or less.

When a small amount of sintering was found in the positive electrode active material obtained after the coating process S4, a crushing treatment may be added.

As described in the above, according to the method for producing the positive electrode active material for the lithium ion secondary battery relating to one embodiment of the present invention, an all-solid-state battery having a charge and discharge capacity equal to a charge and discharge capacity shown by a lithium ion secondary battery using an electrolyte solution is provided.


<3. All-solid-state lithium ion secondary battery>

Next, explaining about one configuration example of an all-solid-state lithium ion secondary battery of the present embodiment. An all-solid-state lithium ion secondary battery of the present embodiment (hereinafter, also simply described as "secondary battery") may be configured to comprise a positive electrode using the above-described positive electrode active material, a negative electrode, and a solid electrolyte. Hereinafter, explaining about each member of the secondary battery of the present embodiment. In addition, an embodiment explained in below is only an example, and the all-solid-state lithium ion secondary battery of the present invention can be performed in forms with various modifications and improvements based on the embodiment described in the present description, and based on a knowledge of a person skilled in the art. In addition, an intended use of the all-slid-state lithium ion secondary battery of the present invention is not limited particularly.

<3-1. Positive electrode>

A positive electrode may be formed by molding a positive electrode mixture. In addition, the positive electrode is treated accordingly according to a battery to be used. For example, a pressurized compression treatment by pressing or the like may be performed for increasing an electrode density.

The positive electrode mixture may be formed by mixing the positive electrode active material in powder form and the solid electrolyte.

The solid electrolyte is added for imparting an appropriate ion conductivity to the electrode. The material of the solid electrolyte is not limited particularly, but for example, a sulfide-based solid electrolyte such as $Li_3PS_4$, $Li_7P_3S_{11}$, $Li_{10}GeP_2S_{12}$, an oxide-based solid electrolyte such as $Li_7La_3Zr_2O_{12}$, $Li_{0.34}La_{0.51}TiO_{2.94}$, and a polymer-based electrolyte such as PEO may be used.

In addition, a binding agent and a conductive assistant may be added to the positive electrode mixture. A conductive agent is added for imparting an appropriate conductivity to the electrode. Materials of the conductive agent is not limited particularly, but for example, a graphite such as a natural graphite, an artificial graphite, an expanded graphite, or the like, or a carbon black material such as an acetylene black or a Ketjen black, may be used.

The binding agent serves a function to bind positive electrode active materials. The binding agent used in the positive electrode mixture is not limited particularly, but for example, one or more selected from a polyvinylidene fluoride (PVDF), a polytetrafluoroethylene (PTFE), a fluororubber, an ethylene propylene diene rubber, a styrene butadiene, a cellulose resin, a polyacrylic acid and else, may be used.

Also, a mixing ratio of each substance in the positive electrode mixture is not limited particularly, but for example, a content of the positive electrode active material in the positive electrode mixture may be 50 mass parts or more and 90 mass parts or less, and a content of the solid electrolyte in the positive electrode mixture may be 10 mass parts or more and 50 mass parts or less.

However, a method for producing the positive electrode is not limited to the above examples, and other methods may be used.

<3-2. Negative electrode>

A negative electrode may be formed by molding a negative electrode mixture. Although components consisting the negative electrode mixture and its proportion are different from the positive electrode, the negative electrode is substantially formed by a method similar to which of the positive electrode, and various treatments are performed according to need as well as the positive electrode.

The negative electrode mixture may be prepared by mixing a negative electrode active material and a solid electrolyte. As the negative electrode active material, for example an occlusion substance capable of inserting and de-inserting lithium ions may be adopted.

The occlusion substance is not limited particularly, but one or more selected from an organic compound fired body such as a natural graphite, an artificial graphite, and a phenol resin, and a powdery body of a carbon substance such as a coke, may be used. When adopting such occlusion substance as the negative electrode active material, a sulfide electrolyte such as $Li_3PS_4$ may be used as the solid electrolyte as well as the positive electrode.

Also, the negative electrode may be a sheet-like member composed by a substance containing metals to be alloyed with a lithium such as an indium or a metallic lithium.

<3-3. Solid electrolyte>

A solid electrolyte is having a characteristic to resist a high voltage. As the solid electrolyte, an inorganic solid electrolyte and an organic solid electrolyte may be cited.

As the inorganic solid electrolyte, an oxide-based solid electrolyte, a sulfide-based solid electrolyte or the like may be used.

The oxide-based solid electrolyte is not limited particularly, and any solid electrolyte may be used as long as it contains an oxygen (O), and also, it is having a lithium ion conductivity and an electron insulating property. As the oxide-based solid electrolyte, for example, a lithium phosphate ($Li_3PO_4$), $Li_3PO_4N_x$, $LiBO_2N_x$, $LiNbO_3$, $LiTaO_3$, $Li_2SiO_3$, $Li_4SiO_4$-$Li_3PO_4$, $Li_4SiO_4$-$Li_3VO_4$, $Li_2O$-$B_2O_3$-$P_2O_5$, $Li_2O$-$SiO_2$, $Li_2O$-$B_2O_3$-$ZnO$, $Li_{1+x}Al_xTi_{2-x}(PO_4)_3$ ($0 \leq x \leq 1$), $Li_{1+x}Al_xGe_{2-x}(PO_4)_3$ ($0 \leq x \leq 1$), $LiTi_2(PO_4)_3$, $Li_{3x}La_{2/3-x}TiO_3$ ($0 \leq x \leq 2/3$), $Li_5La_3Ta_2O_{12}$, $Li_7La_3Zr_2O_{12}$, $Li_6BaLa_2Ta_2O_{12}$,

$Li_{3.6}Si_{0.6}P_{0.4}O_4$, or the like may be cited.

The sulfide-based solid electrolyte is not limited particularly, and any solid electrolyte may be used as long as it contains a sulfur (S), and also, it is having a lithium ion conductivity and an electron insulating property. As the sulfide-based solid electrolyte, for example, $Li_2S-P_2S_5$, $Li_2S-SiS_2$, $LiI-Li_2S-SiS_2$, $LiI-Li_2S-P_2S_5$, $LiI-Li_2S-B_2S_3$, $Li_3PO_4-Li_2S-Si_2S$, $Li_3PO_4-Li_2S-SiS_2$, $LiPO_4-Li_2S-SiS$, $LiI-Li_2S-P_2O_5$, $LiI-Li_3PO_4-P_2S_5$, or the like may be cited.

In addition, as the inorganic solid electrolyte, a solid electrolyte other than the above solid electrolyte may be used, and for example, $Li_3N$, $LiI$, $Li_3N-LiI-LiOH$, or the like may be used.

The organic solid electrolyte is not limited particularly, as long as it is a polymer compound having an ion conductivity, and for example, polyethylene oxide, polypropylene oxide, a copolymer thereof, or the like may be used. In addition, the organic solid electrolyte may comprise a supporting salt (lithium salt).

<3-4. Shape and structure of secondary battery>

Next, explaining about an example of a structure and an arrangement of members of a secondary battery of the present embodiment. The secondary battery of the present embodiment composed of the positive electrode, the negative electrode, and the solid electrolyte as explained in the above, may be configured in various shapes such as a coin shape or a laminated shape. Even the secondary battery is adopting any shape, the positive electrode and the negative electrode may be laminated via the solid electrolyte. And, a positive electrode current collector and a positive electrode terminal coupled to the outside, and also, a negative electrode current collector and a negative electrode terminal coupled to the outside are connected using current collecting lead wires or the like, and sealed in a battery case to complete the secondary battery.

The secondary battery of the present embodiment using the above positive electrode active material may be an all-solid-state lithium ion secondary battery having a charge and discharge capacity equal to a charge and discharge capacity shown by a lithium ion secondary battery using an electrolyte solution.

<3-5. Characteristics of secondary battery>

The secondary battery relating to one embodiment of the present invention using the above positive electrode active material exhibits a high capacity. Concretely, a battery for testing as illustrated in the drawing is configured by using the positive electrode active material of the present embodiment in a positive electrode, and a current density is set to 0.2 mA/cm$^2$, and an initial discharge capacity, which is a discharge capacity when charged until a cutoff voltage of 3.7 V (vs. Li-In) and discharged until a cutoff voltage of 1.9 V (vs. Li-In) after stopped for one hour, is preferably 132 mAh/g or more, more preferably 140 mAh/g or more.

An application of the secondary battery of the present embodiment is not limited particularly, and it may be used suitably for applications requiring various power sources. Also, the secondary battery of the present embodiment is having a charge and discharge capacity equal to a charge and discharge capacity shown by a lithium ion secondary battery using an electrolyte solution, and capable of a miniaturization, so it is also suitable for a power source of an electric vehicle in which a loading space is limited.

Examples

Next, explaining about a positive electrode active material for a lithium ion secondary battery relating to one embodiment of the present invention, a method for producing the positive electrode active material, and a lithium ion secondary battery in more detail by examples. In addition, the present invention will not be limited by these examples. In addition, a method for analyzing metals contained in the positive electrode active material and various methods for evaluating the positive electrode active material in the examples and comparative examples are as below.

[Example 1]

1. Production of particles of lithium transition metal composite oxide

A positive electrode active material was produced by performing the following processes.

(a) Precursor crystallization process

At first, 2.5 L of a pure water was poured into a reaction tank (5 L) and a temperature in the reaction tank was set to 40°C while stirring the pure water. At this time, an atmosphere in the reaction tank was a nitrogen atmosphere in which an oxygen concentration was 1 volume% or less. An appropriate amount of 25 mass% sodium hydroxide aqueous solution and 25 mass% ammonia water were added to the water in this reaction tank, and an initial aqueous solution was prepared such that a pH value was 11.5 on the basis of a liquid temperature of 25°C, and that an ammonia concentration was 5 g/L (initial aqueous solution preparation step).

At the same time, nickel sulfate, cobalt sulfate, and aluminum sulfate were dissolved in the pure water such that a substance quantity ratio of a nickel, a cobalt, and an aluminum was Ni: Co: Al: = 0.82: 0.15: 0.03, and 2.0 mol/L of a mixed aqueous solution was prepared (mixed aqueous solution preparation step).

This mixed aqueous solution was dropped into the initial aqueous solution in the reaction tank at a constant rate to be the reaction aqueous solution. At this time, 25 mass% sodium hydroxide aqueous solution and 25 mass% ammonia water were also dropped into the initial aqueous solution at a constant rate, and it was controlled such that a pH value of the reaction aqueous solution was maintained to 11.5 on the basis of a liquid temperature of 25°C, and that an ammonia concentration of the reaction aqueous solution was maintained to 5 g/L. By these operations, transition metal composite hydroxide particles (hereinafter, referred to as "composite hydroxide particles"), which are precursors of a lithium transition metal composite oxide, were crystallized (crystallization step).

Then, a slurry containing the composite hydroxide particles collected from an overflow port provided at the reaction tank was filtered, and dried after washing and removing water-soluble impurities by ion-exchange water to obtain powdery composite hydroxide particles.

(b) Oxidation roasting process

The composite hydroxide particles produced were fired by using an atmosphere firing furnace (BM-50100M manufactured by SILICONIT) for two hours at a temperature of 600°C in an air atmosphere in which an oxygen concentration is 20 volume%, and then, cooled until a room temperature to obtain transition metal composite oxide particles.

(c) Lithium transition metal composite oxide synthesizing process

With respect to the transition metal composite oxide particles, lithium hydroxide-hydrate weighed such that a ratio of a substance quantity of a lithium will be 1.02 with respect to a sum of substance quantities of a nickel, a cobalt, and an aluminum contained in the transition metal composite oxide particles was added, and mixed using a turbula shaker mixer (T2F manufactured by Dalton Corporation) to obtain a lithium mixture (lithium mixture preparation step).

The lithium mixture was charged into a saggar made of alumina, and the lithium mixture obtained was fired by using an atmosphere firing furnace (BM-50100M manufactured by SILICONIT) for 10 hours at a temperature of 750°C in an oxidizing atmosphere in which an oxygen concentration is 90 volume% or more, and then, cooled until a room temperature (firing step). Thereby, lithium transition metal composite oxide particles were obtained.

2. Evaluation of particles of lithium transition metal composite oxide

With respect to particles of lithium transition metal composite oxide obtained, evaluations as below were performed.

(a) Composition

By a quantitative analysis using an ICP emission spectrometer (725ES manufactured by VARIAN), it was confirmed that, in the lithium transition metal composite oxide, a substance quantity ratio of Li, Ni, Co, and Al was represented by Li: Ni: Co: Al = 1.02: 0.82: 0.15: 0.03.

(b) Crystal structure

A crystal structure of the particles of the lithium transition metal composite oxide was measured by using XRD (X'Pert, PROMRD manufactured by PANALYTICAL), and it was confirmed that it was a layered rock-salt type crystal structure in which a peak pertaining to R-3m structure was detected in a diffraction pattern.

(c) Specific surface area

A BET specific surface area of the particles of the lithium transition metal composite oxide was measured using a fully automatic BET specific surface area measuring device (Macsorb manufactured by MOUNTECH Co., Ltd.). As a result, it was confirmed that the specific surface area was 0.67 $m^2$/g.

(d) Volume average particle size

A volume average particle size of the particles of the lithium transition metal composite oxide was measured using a laser diffraction scattering particle size distribution measuring device (Microtrac HRA manufactured by Nikkiso Co., Ltd.). As a result, it was confirmed that the volume average particle size was 7.0 micrometer.

3. Production of positive electrode active material

A coating process as below was performed with respect to the particles of the lithium transition metal composite oxide to produce a positive electrode active material. A total surface area relating to a total weight of the lithium transition metal composite oxide particles which are the particles to be coated was calculated from a specific surface area of the lithium transition metal composite oxide particles. And, zirconium tetrapropoxide weighed such that a substance quantity of a zirconium per 1 $m^2$ will be 0.15 mmol with respect to the total surface area was charged into 6.5 mL of ethanol per 1 g of zirconium tetrapropoxide, and stirred to dissolve zirconium tetrapropoxide. Next, lithium ethoxide weighed such that a substance quantity ratio (Li/Zr) of Li and Zr of a lithium zirconium compound of a coating layer will be two was charged into 0.05 mL of ethanol per 1 g of lithium ethoxide, and stirred to dissolve lithium ethoxide, and mixed with the ethanol solution of zirconium tetrapropoxide. Further, it was diluted by adding an ethanol such that a molar concentration of Zr in a coating agent will be 0.08 mol/L (coating agent preparation step).

500 g of the lithium transition metal composite oxide particles were charged into a tumbling fluidized coating device (manufactured by Powrex Corporation, Form: FP-MP-01D), a charge air temperature was set to 80°C, the coating agent was added for 171 minutes at a rate of 7 μL/min per 1 g of the lithium transition metal composite oxide particles, and dried while mixing (mixture preparation step and drying step).

A mixture was heat-treated by using an atmosphere firing furnace (BM-50100M manufactured by SILICONIT) for five hours at a temperature of 400°C in an oxidizing atmosphere (heat treatment step). Then, the mixture was cooled until a room temperature to obtain the particles of the lithium transition metal composite oxide having the coating layer which are the positive electrode active material.

4. Evaluation of positive electrode active material

With respect to the positive electrode active material obtained as such, evaluations as below were performed.

(a) Composition

By an analysis using an ICP emission spectrometer (725ES manufactured by VARIAN), it was found that the positive electrode active material was comprising 0.90 mass% of Zr, and that, by comparing with a specific surface area before a coating treatment, a zirconium carrying amount of the coating layer was 0.15 mmol/$m^2$.

(b) Surface analysis

The positive electrode active material obtained was measured using XPS (Versa Probell manufactured by ULVAC-PHI, INC.), and a substance quantity of a surface of the positive electrode active material was obtained from a semi-quantitative value calculated from a peak area of $Ni2P_{3/2}$ spectrum, $Co2P_{3/2}$ spectrum, and Zr3d spectrum obtained, and together with a result of a composition analysis, it was found that a ratio (Zrs/Nis+Cos+Zrs) of a sum of substance quantities of Ni, Co, Zr and a substance quantity of Zr existing on a surface of the positive electrode active material was 0.85.

(c) Carbon content

A carbon content of the positive electrode active material obtained was measured by a high frequency combustion infrared absorption method by using a carbon analysis device (manufactured by LECO, Form: CS-600), and it was found that the carbon content was 0.30 mass%.

(d) Moisture content

A moisture content of the positive electrode active material obtained was measured by using a Karl Fischer moisture meter (manufactured by Kyoto Electronics Manufacturing Co., Ltd., Form: MKC210) with a condition that a heating temperature was 300°C, and it was found that the moisture content was 0.05 mass%.

5. Production of secondary battery

For an evaluation of a capacity of the positive electrode active material obtained, a battery with a structure as illustrated in Fig. 2 (hereinafter, referred to as "battery for testing") was used. The battery 1 for testing was composed of a case and a green compact cell 2 housed in the case.

The case comprises a hollow negative electrode can 3 with one end opened and a positive electrode can 4 arranged at an opening of the negative electrode can 3, and by arranging the positive electrode can 4 at the opening of the negative electrode can 3, it was configured to form a space for housing the green compact cell 2 between the positive electrode can 4 and the negative electrode can 3. The positive electrode can 4 was fixed to the negative electrode can 3 by a thumbscrew 5 and a nut 6.

The negative electrode can 3 and the positive electrode can 4 comprise unillustrated respective terminal of a negative electrode and a positive electrode. The case comprises an insulating sleeve 7, and by this insulating sleeve 7, the negative electrode can 3 and the positive electrode can 4 were fixed such that a noncontact condition is maintained between the negative electrode can 3 and the positive electrode can 4.

A pressurizing screw 8 was provided at a closed end of the negative electrode can 3, and after fixing the positive electrode can 4 to the negative electrode can 3, the pressurizing screw 8 was screwed toward a space housing the green compact cell to maintain the green compact cell 2 in a pressurized condition through a semi-spherical washer 9. A screw plug 10 was provided at an end of the negative electrode can 3 where the pressurizing screw 8 exists. An O-ring 11 was provided between the negative electrode 3 and the positive electrode 4 and between the negative electrode can 3 and the screw plug 10, and a gap between the negative electrode can 3 and the positive electrode can 4 was sealed, and an inside of the case was maintained to be airtight.

Also, the green compact cell 2 was composed of a positive electrode layer, a solid electrolyte layer, and a negative electrode layer, and the green compact cell 2 is a pellet laminated to align in this order. The positive electrode layer and the negative electrode layer were housed in the case such that the positive electrode layer contacts an inner surface of the positive electrode can 4 through a lower current collector 12, and that the negative electrode layer contacts an inner surface of the negative electrode can 3 through an upper current collector 13, the semi-spherical washer 9, and the pressurizing screw 8. The lower current collector 12, the green compact cell 2, and the upper current collector 13 were protected such that the positive electrode layer and the negative electrode layer will not be contacted electrically by a sleeve 14.

Such battery 1 for testing was produced as below.

At first, 80 mg of synthesized solid electrolyte was pressurized at 25 MPa by a pellet forming device to obtain a solid electrolyte pellet. Next, 70 mg of positive electrode active material and 30 mg of solid electrolyte were mixed in a mortar. The solid electrolyte pellet and 15 mg of mixture of the positive electrode active material and the solid electrolyte were set in the pellet forming device, and pressurized at 360 MPa to form the positive electrode layer on the solid electrolyte pellet. A lower electrode, the pellet with downward facing positive electrode layer, an indium foil, and an upper electrode were laminated in the above order from a bottom, and pressurized at 9 kN to configure an electrode. The electrode was sealed in the case, and the pressurizing screw was tightened at a torque of 6 to 7 N · m. The battery for testing was produced in a globe box of Ar atmosphere in which a dew point was controlled to -80°C.

6. Evaluation of secondary battery

A charge and discharge capacity indicating a performance of the battery for testing produced was evaluated as below.

(a) Initial discharge capacity

After producing the battery for testing in which an indium foil was used as the negative electrode, the battery for testing was left as it is for about 24 hours to stabilize an open circuit voltage (OCV), and then, a current density with respect to the positive electrode was set to $0.2$ mA/cm$^2$ and charged until a cutoff voltage of 3.7 V (vs. Li-In), and after stopped for one hour, discharged until a cutoff voltage of 1.9 V (vs. Li-In) to measure a discharge capacity (initial discharge capacity), and the initial discharge capacity was evaluated. A result of the measurement was 140 mAh/g.

[Comparative example 1]

Particles of lithium transition metal composite oxide, a positive electrode active material, and a secondary battery using the positive electrode active material were obtained at conditions as well as the example 1 except that the coating process in the example 1 was not performed. In addition, as the coating process was not performed, the particles of the lithium transition metal composite oxide obtained in "1. Production of particles of lithium transition metal composite oxide" will be a positive electrode active material.

[Comparative example 2]

Particles of lithium transition metal composite oxide, a positive electrode active material, and a secondary battery using the positive electrode active material were obtained at conditions as well as the example 1 except that, when performing the coating process of "2. Method for producing positive electrode active material for lithium in secondary battery", a zirconium carrying amount of aimed coating layer was set to 0.15 mmol/m$^2$ in the coating agent preparation step, and a coating agent was prepared without dissolving lithium ethoxide.

Conditions of a BET specific surface area and a volume average particle size of the lithium transition metal composite oxide particles before the coating process, a zirconium carrying amount of a coating layer, a ratio (Zrs/Nis+Cos+Zrs) of a sum of substance quantities of Ni, Co, Zr and a substance quantity of Zr existing on a surface of the positive electrode active material, a carbon content of the positive electrode active material, a moisture content of the positive electrode active material, and a heat treatment temperature in the heat treatment step in the example and the comparative examples were indicated in Table 1.

[Table 1]

|  | BET specific surface area before coating ($m^2/g$) | Volume average particle size before coating ($\mu$m) | Zirconium content (mass%) | Zirconium carrying amount (mmol/$m^2$) | Zrs/Nis+Cos+Zrs (mol/mol) | Carbon content (mass%) | Moisture content (mass%) | Heat treatment temperature (°C) |
|---|---|---|---|---|---|---|---|---|
| Example 1 | 0.67 | 7.0 | 0.90 | 0.15 | 0.85 | 0.30 | 0.05 | 400 |
| Comparative example 1 |  |  | - | - | - | 0.12 | 0.08 | - |
| Comparative example 2 |  |  | 0.90 | 0.15 | 0.79 | 0.30 | 0.05 | 400 |

Here, a zirconium carrying amount of a coating layer was calculated from a zirconium content (mass%) in the positive electrode active material, an atomic weight of a zirconium, and a BET specific surface area (0.67 m$^2$/g) of the particles of the lithium transition metal composite oxide before coating.

A result of measurements of a substance quantity ratio (Li/Zr) of a lithium and a zirconium in a coating layer and an initial discharge capacity of a secondary battery in the example and the comparative examples were indicated in Table 2.

[Table 2]

|  | Li/Zr in coating layer (mol/mol) | Initial discharge capacity (mAh/g) |
|---|---|---|
| Example 1 | 2 | 140 |
| Comparative example 1 | - | 120 |
| Comparative example 2 | - | 130 |

Here, a substance quantity ratio (Li/Zr) of a lithium and a zirconium in a coating layer was calculated from an amount of zirconium and an amount of lithium added in the coating agent preparation step of the coating process.

It is comprehended that a coating layer of a lithium zirconium compound is formed in the example 1 from a zirconium carrying amount in Table 1 and a value of Li/Zr in Table 2. Also, it is considered that the lithium zirconium compound is lithium zirconate from a value of Li/Zr.

And, it is comprehended that there is no coating layer on the particles of the lithium transition meal composite oxide in the comparative example 1. Also, it is comprehended that a coating layer is a zirconium compound, and not a lithium zirconium compound in the comparative example 2.

An initial discharge capacity of a secondary battery of the example 1 was higher than which of the comparative example 1. It is considered that this is because an increase of an interface resistance between a positive electrode active material and a solid electrolyte was inhibited by coating a surface of the positive electrode active material by lithium zirconate. Also, an initial discharge capacity of a secondary battery of the example 1 was higher than which of the comparative example 2. It is considered that this is because a lithium ion conductivity was improved more than when a zirconium compound was used as a coating layer by introducing lithium into a coating layer to configure as lithium zirconate.

In addition, it was explained in detail about each embodiment and each example of the present invention as the above, but it is easy for those who skilled in the art to understand that various modifications are possible without substantially departing from new matters and effects of the present invention. Therefore, all of such modified examples are included within the scope of the present invention.

For example, a term used at least once in the description or drawings together with a different term that is broader or the same in meaning can also be replaced by the different term in any place in the description or drawings. Further, the operations and the configurations of the positive electrode active material for the lithium ion secondary battery, the method for producing the positive electrode active material, and the lithium ion secondary battery are not limited to those described in each embodiment and each example of the present invention, but may be carried out in various modifications.

Glossary of Drawing References

S1 Precursor crystallization process
S2 Oxidation roasting process
S3 Lithium transition meal composite oxide synthesizing process
S4 Coating process
1 Battery for testing
2 Green compact cell
3 Negative electrode can
4 Positive electrode can
5 Thumbscrew
6 Nut
7 Insulating sleeve
8 Pressurizing screw

9 Semi-spherical washer
10 Plug
11 O-ring
12 Lower current collector
13 Upper current collector
14 Sleeve

**Claims**

1. A positive electrode active material for a lithium ion secondary battery comprising particles of a lithium transition metal composite oxide and a coating layer for coating at least a part of a surface of the particles,

   wherein, in the lithium transition metal composite oxide, a substance quantity ratio of Li and transition metals is represented by Li: Ni: Co: M = t: 1-x-y: x: y (wherein, M is at least one element selected from a group consisting of Mg, Al, Ca, Si, Mn, Ti, V, Fe, Cu, Cr, Zn, Zr, Nb, Mo and W, $0.95 \leqq t \leqq 1.20$, $0 < x \leqq 0.22$, and $0 \leqq y \leqq 0.15$),
   the coating layer comprises a lithium zirconium compound, and
   a ratio Zrs/(Nis+Cos+Zrs) of a sum Nis+Cos+Zrs of substance quantities of Ni, Co, Zr and a substance quantity Zrs of Zr existing on a surface of the positive electrode active material for the lithium ion secondary battery is 0.80 or more and 0.97 or less.

2. The positive electrode active material for the lithium ion secondary battery according to claim 1, wherein a Zr content of the coating layer per 1 $m^2$ of a surface area of the lithium transition metal composite oxide without the coating layer is 0.13 mmol or more and 0.30 mmol or less.

3. The positive electrode active material for the lithium ion secondary battery according to claim 1 or 2, wherein the lithium transition metal composite oxide is having a crystal structure pertaining to a space group R-3m.

4. The positive electrode active material for the lithium ion secondary battery according to any of claims 1 to 3, wherein a carbon content of the positive electrode active material for the lithium ion secondary battery is 0.05 mass% or more and 0.40 mass% or less.

5. The positive electrode active material for the lithium ion secondary battery according to any of claims 1 to 4, wherein a volume average particle size of the particles of the lithium transition metal composite oxide is 2 micrometer or more and 20 micrometer or less.

6. A lithium ion secondary battery comprising at least a positive electrode using the positive electrode active material for the lithium ion secondary battery according to any of claims 1 to 5, a negative electrode, and a solid electrolyte.

7. A method for producing a positive electrode active material for a lithium ion secondary battery comprising particles of a lithium transition metal composite oxide and a coating layer for coating at least a part of a surface of the particles, the method comprising:

   a precursor crystallization process for preparing a transition metal composite hydroxide which is a precursor of the lithium transition metal composite oxide by a crystallization reaction;
   an oxidation roasting process for obtaining a transition metal composite oxide by oxidizing and roasting the transition metal composite hydroxide obtained in the precursor crystallization process;
   a lithium transition metal composite oxide synthesizing process for obtaining the lithium transition metal composite oxide by mixing the transition metal composite oxide obtained in the oxidation roasting process with a lithium compound to prepare a mixture and by firing the mixture; and
   a coating process for forming the coating layer containing a lithium zirconium compound on at least a part of a surface of the particles of the lithium transition metal composite oxide obtained in the lithium transition metal composite oxide synthesizing process,
   wherein, in the coating process, the particles of the lithium transition metal composite oxide obtained in the lithium transition metal composite oxide synthesizing process and a coating agent containing a lithium compound and a zirconium compound are mixed, dried, and heat-treated.

8. The method for producing the positive electrode active material for the lithium ion secondary battery according to claim 7, wherein, in the lithium transition metal composite oxide synthesizing process, the mixture is fired at a temperature of 700°C or more and 800°C or less in an oxidizing atmosphere.

9. The method for producing the positive electrode active material for the lithium ion secondary battery according to claim 7 or 8, wherein, in the coating process, the zirconium compound is added such that a Zr amount of the lithium zirconium compound will be 0.13 mmol or more and 0.30 mmol or less per 1 $m^2$ of a surface area of the lithium transition metal composite oxide, and

components other than oxygen of the lithium transition metal composite oxide obtained in the coating process are represented by Li: Ni: Co: M = t: 1-x-y: x: y (wherein, M is at least one element selected from a group consisting of Mg, Al, Ca, Si, Mn, Ti, V, Fe, Cu, Cr, Zn, Zr, Nb, Mo and W, $0.95 \leqq t \leqq 1.20$, $0 < x \leqq 0.22$, and $0 \leqq y \leqq 0.15$), and a ratio Zrs/(Nis+Cos+Zrs) of a sum Nis+Cos+Zrs of substance quantities of Ni, Co, Zr and a substance quantity Zrs of Zr existing on a surface of the positive electrode active material for the lithium ion secondary battery is 0.80 or more.

10. The method for producing the positive electrode active material for the lithium ion secondary battery according to any of claims 7 to 9, wherein, in the coating process, the lithium compound and the zirconium compound are added such that a substance quantity ratio (Li/Zr) of Li and Zr in the lithium zirconium compound of the coating layer will be 1.8 or more and 2.2 or less.

11. The method for producing the positive electrode active material for the lithium ion secondary battery according to any of claims 7 to 10, wherein the coating agent comprises a mixture of the lithium compound and the zirconium compound with low melting point to melt by a heat treatment of the coating process, or which is a liquid at a room temperature, and also, a solution in which the lithium compound and the zirconium compound to be used in the coating process are dissolved in a solvent.

12. The method for producing the positive electrode active material for the lithium ion secondary battery according to any of claims 7 to 11, wherein the zirconium compound to be used in the coating process is one or more of alkoxides such as zirconium tetrapropoxide and zirconium tetrabutoxide.

13. The method for producing the positive electrode active material for the lithium ion secondary battery according to any of claims 7 to 12, wherein the heat treatment is performed at a temperature of 300°C or more and 600°C or less in an oxidizing atmosphere for 1 hour or more and 5 hours or less.

**FIG.1**

**FIG.2**

<div style="text-align:center">**INTERNATIONAL SEARCH REPORT**</div>

| | International application No. |
|---|---|
| | PCT/JP2021/021860 |

**A. CLASSIFICATION OF SUBJECT MATTER**
H01M 4/36(2006.01)i; H01M 4/505(2010.01)i; H01M 4/525(2010.01)i; H01M 10/0562(2010.01)i
FI: H01M4/525; H01M4/505; H01M4/36 C; H01M10/0562

According to International Patent Classification (IPC) or to both national classification and IPC

**B. FIELDS SEARCHED**

Minimum documentation searched (classification system followed by classification symbols)
H01M4/00-4/62; H01M10/0562

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/043382 A1 (FUJIFILM CORPORATION) 08 March 2018 (2018-03-08) paragraphs [0006]-[0007], [0124], [0137] | 1-13 |
| Y | JP 2017-107827 A (SUMITOMO METAL MINING CO., LTD.) 15 June 2017 (2017-06-15) paragraphs [0120]-[0127], examples 1-8, table 2 | 1-13 |
| Y | WO 2016/017783 A1 (SUMITOMO METAL MINING CO., LTD.) 04 February 2016 (2016-02-04) paragraphs [0042]-[0045], examples 3, 7 | 4 |
| Y | JP 2020-033234 A (SUMITOMO METAL MINING CO., LTD.) 05 March 2020 (2020-03-05) paragraphs [0183]-[0194] | 7-13 |
| A | JP 2014-116149 A (SAMSUNG R&D INSTITUTE JAPAN CO., LTD.) 26 June 2014 (2014-06-26) example 1 | 1-13 |
| A | JP 2016-024968 A (SUMITOMO METAL MINING CO., LTD.) 08 February 2016 (2016-02-08) examples 1-5 | 1-13 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 August 2021 (18.08.2021) | 31 August 2021 (31.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 4 163 997 A1**

| | INTERNATIONAL SEARCH REPORT | International application No. |
|---|---|---|
| | | PCT/JP2021/021860 |

C (Continuation).　DOCUMENTS CONSIDERED TO BE RELEVANT

| Category* | Citation of document, with indication, where appropriate, of the relevant passages | Relevant to claim No. |
|---|---|---|
| A | CN 110649252 A (GUIZHOU ZHONGWEI RESOURCES RECYCLING INDUSTRIAL DEVELOPMENT CO., LTD.) 03 January 2020 (2020-01-03) paragraphs [0033]-[0037] | 1-13 |
| A | CN 110690416 A (ZHEJIANG CHAOWEI CHUANGYUAN INDUSTRIAL CO., LTD.) 14 January 2020 (2020-01-14) example 4 | 1-13 |

Form PCT/ISA/210 (continuation of second sheet) (January 2015)

EP 4 163 997 A1

**INTERNATIONAL SEARCH REPORT**
Information on patent family members

International application No.

PCT/JP2021/021860

| Patent Documents referred in the Report | Publication Date | Patent Family | Publication Date |
|---|---|---|---|
| WO 2018/043382 A1 | 08 Mar. 2018 | US 2019/0198919 A1 paragraphs [0007]-[0010], [0332]-[0342], [0396]-[0399] EP 3509139 A1 KR 10-2019-0033093 A CN 109643790 A | |
| JP 2017-107827 A | 15 Jun. 2017 | (Family: none) | |
| WO 2016/017783 A1 | 04 Feb. 2016 | US 2017/0207453 A1 paragraphs [0049]-[0053], examples 3, 7 EP 3176859 A CN 106575761 A | |
| JP 2020-033234 A | 05 Mar. 2020 | (Family: none) | |
| JP 2014-116149 A | 26 Jun. 2014 | US 2014/0093786 A1 example 1 KR 10-2014-0074174 A | |
| JP 2016-024968 A | 08 Feb. 2016 | (Family: none) | |
| CN 110649252 A | 03 Jan. 2020 | (Family: none) | |
| CN 110690416 A | 14 Jan. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020100294 A

- JP 2014056661 A

**Non-patent literature cited in the description**

- **NARUMI OHTA et al.** LiNbO3-coated LiCoO2 as cathode material for all solid-state lithium secondary batteries. *Electrochemistry Communications,* 2007, vol. 9, 1486-1490

- **SEITARO ITO et al.** A rocking chair type all-solid-state lithium ion battery adopting Li2O-ZrO2 coated LiNi0. 8Co0. 15Al0. 0502 and a sulfide based electrolyte. *Journal of Power Sources,* 2014, vol. 248, 943-950